Europäisches Patentamt

European Patent Office

Office européen des brevets

(11) Publication number: **0 163 351**
**B1**

# EUROPEAN PATENT SPECIFICATION

(45) Date of publication of patent specification: **27.04.88**

(51) Int. Cl.⁴: **H 05 B 33/14**

(21) Application number: **85200819.2**

(22) Date of filing: **22.05.85**

(54) Thin film electroluminescent device.

(30) Priority: **31.05.84 US 615853**

(43) Date of publication of application:
**04.12.85 Bulletin 85/49**

(45) Publication of the grant of the patent:
**27.04.88 Bulletin 88/17**

(84) Designated Contracting States:
**DE FR GB**

(56) References cited:
**DE-A-2 748 561**
**GB-A-1 300 548**
**GB-A-1 481 047**
**US-A-4 342 945**

**IEEE TRANSACTIONS ON ELECTRON DEVICES, vol. ED-25, no. 9, September 1978, Tottori, Japan, KENJI OKAMOTO et al.: "Thin-Film DC Electroluminescent Devices of an In2O3-ZnS: Mn-ZnSe-Al Structure", pages 1170-1172**

(73) Proprietor: **N.V. Philips' Gloeilampenfabrieken**
**Groenewoudseweg 1**
**NL-5621 BA Eindhoven (NL)**

(72) Inventor: **Cammack, David Alan**
**c/o INT. OCTROOIBUREAU B.V. Prof. Holstlaan 6**
**NL-5656 AA Eindhoven (NL)**
Inventor: **Dalby, Richard John**
**c/o INT. OCTROOIBUREAU B.V. Prof. Holstlaan 6**
**NL-5656 AA Eindhoven (NL)**
Inventor: **Walz, David Gregory**
**c/o INT. OCTROOIBUREAU B.V. Prof. Holstlaan 6**
**NL-5656 AA Eindhoven (NL)**
Inventor: **Bhargava, Rameshwar Nath**
**c/o INT. OCTROOIBUREAU B.V. Prof. Holstlaan 6**
**NL-5656 AA Eindhoven (NL)**

(74) Representative: **Raap, Adriaan Yde et al**
**INTERNATIONAAL OCTROOIBUREAU B.V. Prof. Holstlaan 6**
**NL-5656 AA Eindhoven (NL)**

## Description

The invention in this case relates to a novel direct current (DC) operated thin film electroluminescent device.

Thin film electroluminescent devices find an increased number of applications. Among commercial uses of these devices are flat panel video displays, information displays, advertising displays and similar uses.

In general, these electroluminescent displays are AC operated although operation by DC requires a simpler structure with reduced operating voltage. However, there are serious problems in the DC operated electroluminescent devices which are presently available.

A major problem is that the DC operated devices exhibit a severe tendency to catastrophic degradation due to electrical breakdown in the phosphor layer of the device. Another problem with these DC operated devices is that many of them exhibit a non-uniformity of light emission.

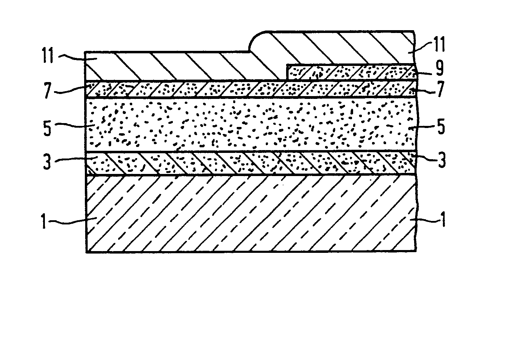

An example of such a DC operated electroluminescent device is the device as shown for example in British patent 1,300,548. As shown in Figure 5 of the patent such a device may comprise a phosphor layer sandwiched between a transparent electrode which may be for example a film of tin oxide or indium oxide and a nontransparent electrode such as copper or aluminium graphite. As the phosphor of this British patent may employ manganese activated zinc sulphide, zinc selenide or a mixture of zinc sulphide and zinc selenide. Upon the application of DC to the electrodes an electroluminescence is produced which luminescence is visible through the transparent electrode. By proper design of the electrodes it is possible to produce luminescence of any desired configuration.

While the output of the electroluminescent device of this British patent has been found to be initially satisfactory, it has been found to deteriorate rapidly and to have an unsatisfactorily short life.

Electroluminescent devices of improved life are those shown in US—A—4,342,945. In the device of this patent, dielectric layers, for example 180 nm thick layers of yttrium oxide, are positioned between the electrodes and the luminescent film. While the yttrium oxide serves to prevent degradation of the luminescent film, the device is not operable by application of DC as the thickness of the layers does not permit carriers to tunnel through it. Further, the luminescence produced frequently is not of a sufficiently high level.

It is a general object of this invention to provide an improved DC operable thin electroluminescent device.

According to the invention a DC operable thin film electroluminescent device comprises a thin manganese activated zinc sulpho-selenide phosphor of the formula $ZnS_{1-x}Se_x$:Mn wherein $.2 \leq x \leq .8$ sandwiched between two electrodes, one of the electrodes being transparent to luminescence from the phosphor film. The other electrode is reflective to luminescence from the luminescent film. Further according to the invention, between the reflective electrode and the luminescent film a thin film of yttrium oxide of a thickness of 5—15 nm is positioned. Operation of the electroluminescent device of the invention requires in general the application of DC voltage of about 30 to 100 volts across the electrodes. Luminance is produced which in general has great magnitude and a significantly higher spatial uniformity than that produced in DC electroluminescent devices of the prior art. In addition, it has been found that the useful life of the electroluminescent device of the invention significantly exceeds that of the prior art devices.

For a more complete understanding, the invention will now be described in greater detail with reference to the drawing, the sole figure of which is a cross-sectional view of a preferred electroluminescent device of the invention and the following example.

A 160 nm thick layer of indium oxide was thermally evaporated onto a glass substrate 1 to form a transparent electrode 3. A 600 nm thick phosphor layer 5 of $ZnS_{0.5}Se_{0.5}$:Mn was then deposited by thermal deposition on the free surface of the indium oxide layer 3.

A 7.5 nm thick layer of yttrium oxide 7 was then deposited by electron beam evaporation on the free surface of the phosphor layer 5. In a similar manner, a further deposition of the yttrium oxide was then carried out on selected portions of the free surface of the 7.5 nm thick yttrium oxide layer 7 to form 75 nm thick electrical contact area 9.

A 500 nm thick reflective metal electrode layer 11 of aluminium was then deposited by thermal deposition on the free surfaces of the 7.5 nm thick yttrium oxide layer 7 and the contact area 9.

A DC voltage of 50—60 volts was then applied between the transparent electrode 3 and the metal electrode layer 11 with the metal electrode layer 11 functioning as the anode A.

Driving of the device was carried out by use of unipolar pulses or continuous direct current. A yellow-orange luminescence with a maximum at 583 nm was emitted from the device. Under these conditions the peak luminescence was 4110 cd/m² (1200 fL=4110 nit) and the average luminescence was 2055 cd/m² (600 fL=2055 nit).

The continuous, DC driven operating lifetime of the device was found to be in excess of 50 hours.

While we have described the invention with reference to a particular example and drawing other modifications will be apparent to those skilled in the art without departing from the spirit and scope of the invention as defined in the appended claims.

## Claims

1. A thin film direct current (DC) operable electroluminescent device comprising a layer of electroluminescent material sandwiched between first and second electrodes, the first electrode being transparent to luminescence from said layer, characterized in that the luminescent layer comprises manganese activated zinc sulfoselenide of the formula $ZnS_{1-x}Se_x$:Mn wherein $0.2 \leq x \leq 0.8$ and a layer of yttrium oxide having a thickness of 5—15 nm is positioned between said luminescent layer and the second electrode which is reflective to luminescence from said luminescent layer.

2. The electroluminescent device of Claim 1, characterized in that the layer of yttrium oxide is disposed on the surface of said thin luminescent film opposing said electrode reflective to luminescence from said luminescent film.

3. The electroluminescent device of Claim 1 or 2, characterized in that $x=0.5$.

4. The electroluminescent device of Claim 1, 2 or 3 characterized in that the reflective electrode is an aluminium electrode.

5. The electroluminescent element of Claim 1, 2, 3 or 4, characterized in that the transparent electrode is an indium sesquioxide electrode.

## Patentansprüche

1. Gleichstrombetriebene Dünnfilm-Elektrolumineszenzanordnung mit einer Schicht aus Elektrolumineszensmaterial, die zwischen einer ersten und einer zweiten Elektrode vorgesehen ist, wobei die erste Elektrode für Lumineszenz von der genannten Schicht transparent ist, dadurch gekennzeichnet, dass die Lumineszenzschicht magnesiumaktiviertes Zinksulfoselenid mit der Formel $ZnS_{1-x}Se_x$:Mn enthält, in der $0,2 \leq x \leq 0,8$ ist und wobei eine Schicht aus Yttriumoxid mit einer Dicke von 5—15 nm zwischen der genannten lumineszierende Schicht und der zweiten Elektrode vorgesehen ist, die für Lumineszenz von der genannten lumineszierenden Schicht reflektierend ist.

2. Elektrolumineszenzanordnung nach Anspruch 1, dadurch gekennzeichnet, dass die Yttriumoxidschicht auf der Oberfläche des genannten lumineszierenden Dünnfilms gegenüber der genannten für Lumineszenz von dem genannten Lumineszensfilm reflektierenden Elektrode vorgesehen ist.

3. Elektrolumineszenzanordnung nach Anspruch 1 oder 2, dadurch gekennzeichnet, dass $x=0,5$ ist.

4. Elektrolumineszenzanordnung nach Anspruch 1, 2 oder 3, dadurch gekennzeichnet, dass die reflektierende Elektrode eine Aluminiumelektrode ist.

5. Elektrolumineszenzelement nach Anspruch 1, 2, 3 oder 4, dadurch gekennzeichnet, dass die transparente Elektrode eine Indiumsesquioxidelektrode ist.

## Revendications

1. Dispositif électroluminescent à couche mince fonctionnant en courant continu comportant une couche en matériau électroluminescent inséré entre les première et seconde électrodes, dont la première électrode est transparente à la luminescence provenant de ladite couche, caractérisé en ce que la couche luminescente contient du sulfure-séléniure de zinc activé à l'aide de manganèse et répondant à la formule $ZnS_{1-x}Se_x$:Mn, dans laquelle $0,2 \leq x \leq 0,8$ et une couche en oxyde d'yttrium d'une épaisseur de 5 à 15 nm positionnée entre ladite couche luminescente et la seconde électrode qui réfléchit la luminescence provenant de ladite couche luminescente.

2. Dispositif électroluminescent selon la revendication 1, caractérisé en ce que la couche en oxyde d'yttrium est disposée sur la surface dudit film luminescent mince situé vis-à-vis de ladite électrode qui réfléchit la luminescence provenant dudit film luminescent.

3. Dispositif électroluminescent selon la revendication 1 ou 2, caractérisé en ce que $x=0,5$.

4. Dispositif électroluminescent selon la revendication 1, 2 ou 3, caractérisé en ce que l'électrode réflectrice est une électrode d'aluminium.

5. Elément électroluminescent selon la revendication 1, 2, 3 ou 4, caractérisé en ce que l'électrode transparente est une électrode en sesquioxyde d'indium.